# EUROPÄISCHE PATENTSCHRIFT

(11) **EP 2 169 356 B1**
(45) Veröffentlichungstag und Bekanntmachung des Hinweises auf die Patenterteilung: **26.12.2018**
(21) Anmeldenummer: 09171046.7
(22) Anmeldetag: 23.09.2009
(51) Int. Cl.: G01D 5/14, G01D 5/244, H02K 41/03

(54) **Vorrichtung zur Bestimmung der axialen Position des Läufers eines Linearmotors**
Method for determining the axial position of the runner of a linear motor
Dispositif de détermination de la position axiale du rotor d'un moteur linéaire

(30) Priorität: 25.09.2008 EP 08165152
(43) Veröffentlichungstag der Anmeldung: 31.03.2010
(73) Patentinhaber: NTI AG, 8957 Spreitenbach (CH)
(72) Erfinder: Ausderau, Daniel, 8500, Frauenfeld (CH)
(74) Vertreter: Bohest AG

(56) Entgegenhaltungen:
- WO-A-02/48652
- DE-A1- 10 328 753

## Beschreibung

Die Erfindung betrifft eine Vorrichtung zur Bestimmung der axialen Position eines Linearmotors.

Linearmotoren werden in unzähligen Anwendungsgebieten eingesetzt. Ein Linearmotor umfasst immer einen Stator sowie einen relativ zu diesem Stator in axialer Richtung - also linear - bewegbaren Läufer (daher auch der Name Linearmotor), sowie eine Ansteuerelektronik, die häufig auch als Steuerung bezeichnet wird. Die Kraft zum Antrieb des Läufers wird typischerweise dadurch erzeugt, dass eine der beiden Komponenten Läufer und Stator eine permanentmagnetische Erregung aufweist und die andere Komponente (also der Stator oder der Läufer) mit bestrombaren Wicklungen versehen ist. Die permanentmagnetische Erregung wird zumeist durch diskrete Permanentmagnete erzeugt, die in einer bestimmten Art und Weise angeordnet sind. Ob die Permanentmagnete im Stator oder im Läufer vorgesehen sind und die Wicklungen dementsprechend in der anderen Komponente, richtet sich häufig nach dem gewünschten Einsatzgebiet bzw. den dortigen Gegebenheiten.

Beispielsweise können die Permanentmagnete in einem rohrartig ausgebildeten Läufer angeordnet sein, wobei das Rohr aus einem unmagnetischen Material (z.B. Aluminium oder Edelstahl) hergestellt ist. Die Magnetisierung in Längsrichtung betrachtet weist beispielsweise das Muster N-S-N-S-N... auf (N = magnetischer Nordpol, S = magnetischer Südpol). Eine solche Magnetisierung kann durch Zusammenfügen von Permanentmagnet-Scheiben, Eisenscheiben und/oder nichtmagnetischen Abstandshaltern erzeugt werden. Grundsätzlich ist es aber auch denkbar, anstelle der zusammengefügten einzelnen Permanentmagnet-Scheiben einen langen Magnetstab zu verwenden, der direkt in der gewünschten Art magnetisiert ist.

Eines der Leistungsmerkmale eines solchen Linearmotors ist eine genaue Positionsregelung des Läufers. Diese basiert unter anderem auf einer genauen Bestimmung der jeweiligen Läuferposition. Zur Bestimmung der Läuferposition gibt es bereits verschiedene technische Lösungen. Bei einer dieser Lösungen werden die Permanentmagnete des Linearmotors selbst als "Massstab" benutzt. Als Sensoren kommen bei diesem Ansatz beispielsweise zwei Halleffekt-Sensoren zur Anwendung, welche die Magnetfeldstärke erfassen, wenn der Läufer an den Halleffekt-Sensoren vorbei bewegt wird. Die Halleffekt-Sensoren sind in axialer Richtung versetzt zueinander angeordnet, und zwar jeweils um ein Viertel der magnetischen Periode des von den Permanentmagneten in den Halleffekt-Sensoren erzeugten im wesentlichen sinusförmigen bzw. cosinusförmigen Signals (bzw. um ein Viertel plus einem ungeradzahligen Vielfachen einer halben magnetischen Periode). Über eine Sinus-Cosinus-Auswertung (Sensorsignale) lässt sich damit die Position des Läufers innerhalb einer Periode ermitteln. Bei der jeweiligen Inbetriebnahme des Linearmotors wird ein Initialisierungslauf des Läufers durchgeführt, sodass anschliessend über das Abzählen der Perioden und die Sinus-Cosinus-Auswertung jeweils die genaue Bestimmung der Läuferposition möglich ist. Diese technische Lösung ist beispielsweise in US 6,316,848 beschrieben.

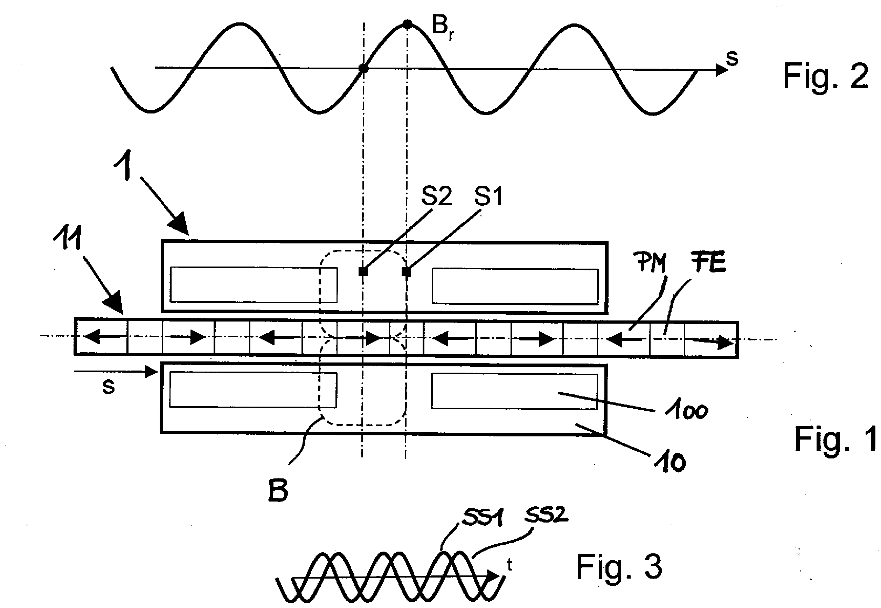

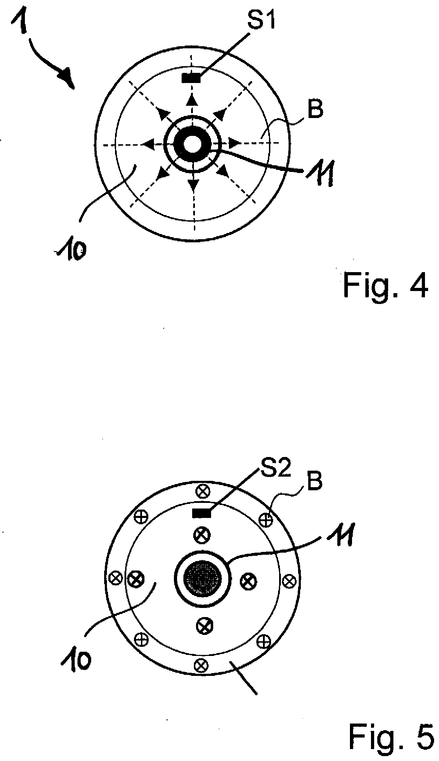

Ein Linearmotor 1 mit einem solchen Aufbau ist in Fig. 1 gezeigt. Der Linearmotor 1 umfasst einen Stator 10 und einen Läufer 11, sowie zwei Halleffekt-Sensoren S1 und S2. Im Stator 10 ist eine Antriebswicklung 100 angeordnet, und der Läufer 11 umfasst eine Anzahl axial magnetisierter Permanentmagnete PM sowie zwischen diesen Permanentmagneten angeordnete Eisenscheiben FE. Die beiden Sensoren S1 und S2 sind in einem axialen Abstand voneinander angeordnet, der einem Viertel einer "magnetischen Periode" entspricht, wobei mit magnetischer Periode derjenige Abstand gemeint ist, bei dem sich die gleiche Magnetisierung im Läufer wiederholt. Gestrichelt angedeutet ist in **Fig. 1** der idealisierte Verlauf der magnetischen Induktion B, wobei in Fig. 1 zu erkennen ist, dass die radiale Komponente Bᵣ der magnetischen Induktion am Ort des Sensors S1 ihr Maximum aufweist, während sie am Ort des Sensors S2 null ist. Entsprechend zeigt **Fig. 2** den Verlauf der radialen Komponente Bᵣ der magnetischen Induktion über dem Weg s in der Situation des Linearmotors 1, wie er in Fig. 1 dargestellt ist. Dieser grundsätzlich sinusförmige Verlauf der radialen Komponente Bᵣ der magnetischen Induktion über den Ort s wird bei einer Bewegung des Läufers 11 quasi an den Sensoren S1 und S2 vorbeibewegt, sodass sich ein zeitlicher Verlauf des Sensorsignals SS1 bzw. SS2 ergibt, wie er qualitativ in **Fig. 3** über der Zeit t aufgetragen ist. Der entsprechende Verlauf der magnetischen Induktion B am Ort der Sensoren S1 bzw. S2 ist noch einmal in einem Querschnitt am Ort der jeweiligen Sensoren S1 **(****Fig. 4****)** bzw. S2 **(****Fig. 5****)** zu erkennen. Man erkennt, dass die magnetische Induktion B am Ort des Sensors S1 lediglich eine radiale Komponente aufweist (siehe Bᵣ in Fig. 2), während diese radiale Komponente am Ort des Sensors S2 null ist und die magnetische Induktion B dort nur eine axiale Komponente aufweist.

Die Genauigkeit, mit welcher nun die Bestimmung der Läuferposition erfolgen kann, hängt dabei von mehreren Faktoren ab. So spielt die Auflösung (z.B. Anzahl der Bits zur Darstellung einer bestimmten Läuferposition) und die Genauigkeit der Sensoren und der Auswerteelektronik eine Rolle. Weiterhin ist auch die geometrische Anordnung der Sensoren als Ganzes im Stator von Bedeutung (z.B. wie genau sie auf einer zur Längsachse des Linearmotors parallelen Achse liegen) wie auch die Anordnung der eigentlichen Sensorelemente innerhalb des Sensorgehäuses des einzelnen Sensors. Durch entsprechende Messungen und Korrekturen können Bauteil- bzw. Fertigungstoleranzen jedoch kompensiert werden. Ein hierfür geeignetes Korrekturverfahren ist beispielsweise in US 6,532,791 beschrieben. Die Erfassung des Magnetfeldes (z.B. der magnetischen Induktion) lässt sich somit in der Praxis hochgenau realisieren.

Auf dem Gebiet der magnetischen Drehwinkelgeber ist aus der WO 02/48562 ein solcher Drehwinkelgeber bekannt, der einen rotierenden, zylindrischen Magneten sowie einen feststehenden, flussführenden Ring umfasst, der den Magneten umgibt. Auf der Innenseite des Rings sind vier jeweils um 90° zueinander versetzte Magnetfeldsensoren angeordnet. Durch den flussführenden Ring werden Einflüsse auf die Messung, die von einer radialen Fehlposition des Magneten herrühren, gemindert.

Was die Magnetfelderzeugung bei Linearmotoren betrifft, so kommen ebenfalls verschiedene Ungenauigkeiten ins Spiel, die im Hinblick auf eine genaue Bestimmung bzw. Regelung der Läuferposition relevant sein können. Diese Ungenauigkeiten haben unterschiedliche Ursachen. Betrachtet man beispielsweise den Fall, dass die Permanentmagnete im Läuferrohr angeordnet sind, sind hier die Fertigungstoleranzen der einzelnen Bauteile (Magnete, allfällige Eisenscheiben zwischen den Magneten, allfällige unmagnetische Abstandshalter, Läuferrohr, etc.) zu nennen. Zusätzlich zu den Fertigungstoleranzen der Bauteile kommen beim Anordnen (Aneinanderreihen) der Bauteile Fügespalte und/oder Verkippungen sowie der Versatz aus der Mitte hinzu. Weitere Ungenauigkeiten kommen durch die inhomogenen magnetischen Eigenschaften der Bauteile, insbesondere der Permanentmagnete, hinzu. Aufgrund des Fertigungsprozesses weisen die Permanentmagnete normalerweise über ihr Volumen betrachtet eine ungleichmässige bzw. von der Vorgabe abweichend verteilte Magnetisierung auf.

Wie bereits angedeutet, ist es für eine möglichst genaue Bestimmung der Läuferposition wünschenswert, dass sich im Betrieb die magnetische Induktion (Magnetfeldstärke) am Ort eines Sensors bei jeder magnetischen Periode möglichst identisch wiederholt. Dann kann - vorausgesetzt die Auswerteelektronik kennt die exakten Signalverläufe der beiden Sensoren über eine magnetische Periode sowie deren Phasenlage zueinander - durch eine entsprechende Signalverarbeitung die aktuelle Läuferposition mit einer hohen Genauigkeit aus den Sensorsignalen bestimmt werden.

In der Praxis können aber verschiedene Ungenauigkeiten dazu führen und führen auch regelmässig dazu, dass das Magnetfeld über den Bewegungsbereich des Läufers einen nicht periodischen - und daher störenden - Feldanteil aufweist. Sowohl produktionsbedingte Ungenauigkeiten als auch betriebsabhängige Zustände können für diese störenden Feldanteile verantwortlich sein.

Zu den produktionsbedingten Ungenauigkeiten gehören, wie bereits weiter oben beschrieben, zum Beispiel inhomogene magnetische Eigenschaften der Permanentmagnete. Besonders die Magnetisierung der Permanentmagnete, welche beim Zusammenbau des Läufers verwendet werden, weisen selbst bei identischer geometrischer Form und Grösse nicht immer dieselben magnetischen Eigenschaften auf. So kann beispielsweise die Magnetisierung von einem oder mehreren der Permanentmagnete lokal begrenzt oder über das ganze Volumen des Permanentmagneten hinweg in Bezug auf die Magnetisierungsrichtung und/oder die Magnetisierungsstärke von der Spezifikation abweichen. Im beispielhaft betrachteten Fall eines geometrisch rotationssymmetrischen, in axialer Richtung magnetisierten Magneten (analog gilt dies auch für andere Arten der Magnetisierung) kann es also durchaus vorkommen, dass das von ihm erzeugte Magnetfeld nicht rotationssymmetrisch ist. Aufgrund von Fertigungstoleranzen bei der Produktion ist es ausserdem möglich, dass die Richtung der Magnetisierung nicht exakt mit der geometrischen Längsachse des Permanentmagneten übereinstimmt. Der Permanentmagnet weist z.B. neben der axialen auch eine diametrale Komponente der Magnetisierung auf, was insgesamt zu einer nichtrotationssymmetrischen Magnetisierung führt und ein entsprechendes nicht-rotationssymmetrisches Magnetfeld zur Folge hat. Eine nicht vollständig axial ausgerichtete Magnetisierung führt somit zu einem nicht-rotationssymmetrischen Magnetfeld in ihrer Umgebung. Da die Magnetisierung von Permanentmagnet zu Permanentmagnet variieren kann, ergibt sich zusammen mit den anderen im Läuferrohr angeordneten Permanentmagneten insgesamt ein in axialer Richtung nicht periodischer Feldverlauf.

Beim fertig produzierten Läufer führen neben den magnetisch inhomogenen Eigenschaften auch geometrische Toleranzen zu nicht periodischen Feldverläufen. Einerseits können Abweichungen gegenüber der spezifizierten Form, z.B. der Länge und/oder des Durchmesser der Permanentmagnete und/oder der Eisenscheiben zu nicht periodischen Feldverläufen führen. Weiterhin können sich beim Zusammenbau (Stapelung der Permanentmagnete und Eisenscheiben im Läuferrohr) weitere Abweichungen von der Spezifikation ergeben. Insbesondere können dabei der achsparallele Versatz von im Durchmesser zu kleinen Permanentmagneten bzw. Eisenscheiben gegenüber dem Läuferrohr, oder deren Verkippung gegenüber der Längsachse zu zusätzlichen Abweichungen vom periodischen Verlauf des Magnetfeldes führen.

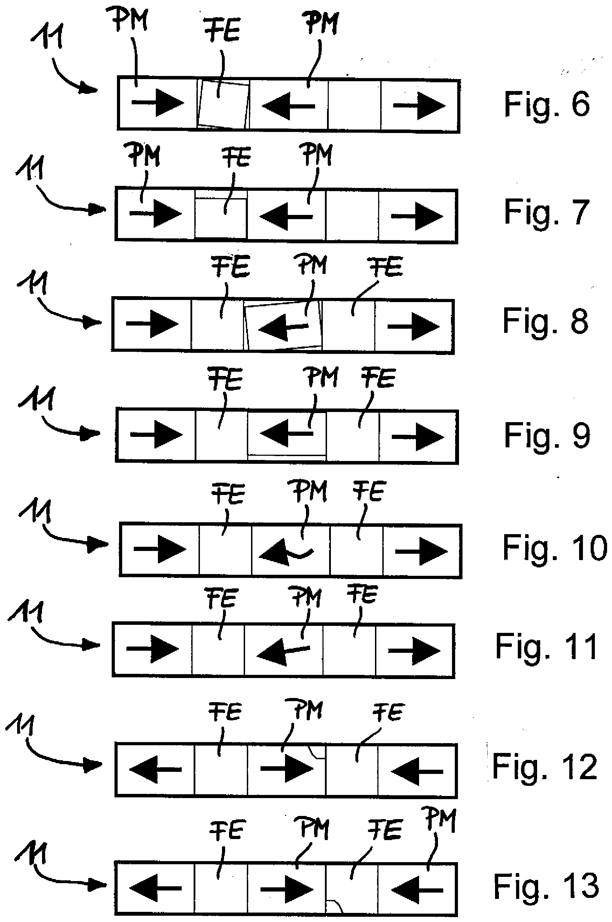

Im folgenden werden beispielhaft einige der angesprochenen Fälle mit Hilfe von zeichnerischen Darstellungen erörtert, bei denen es zu einer Abweichung von einem homogenen Feldverteilung kommen kann. In **Fig. 6** ist ein Ausschnitt aus einem Läufer 11 gezeigt, bei dem die Permanentmagneten PM ideal axial magnetisiert sind, während die geometrischen Abmessungen von einer der Eisenscheiben FE zu klein sind und diese Eisenscheibe FE verkippt zwischen zwei Permanentmagneten PM angeordnet ist. In **Fig. 7** ist ein Ausschnitt eines Läufers 11 zu erkennen, bei dem eine Eisenscheibe FE zwar zwischen zwei Permanentmagneten axial orientiert angeordnet ist, deren geometrischen Abmessungen jedoch zu klein sind und die Achse dieser zu kleinen Eisenscheibe FE nicht mit der Achse des Läufers 11 zusammenfällt (die Eisenscheibe FE ist mit einem Versatz achsparallel angeordnet). In **Fig. 8** ist ein Ausschnitt aus einem Läufer 11 zu erkennen, bei dem die geometrischen Abmessungen von einem der Permanentmagneten PM zu klein sind und dieser Permanentmagnet PM verkippt zwischen zwei Eisenscheiben FE angeordnet ist. In **Fig. 9** ist entsprechend ein Ausschnitt aus einem Läufer 11 zu erkennen, bei dem der Permanentmagnet PM zwar ideal axial magnetisiert ist und auch in axialer Richtung zwischen zwei Eisenscheiben FE angeordnet ist, jedoch die geometrischen Abmessungen des Permanentmagneten PM zu klein sind und die Achse des Permanentmagneten PM nicht mit der Achse des Läufers 11 zusammenfällt (der Permanentmagnet ist mit einem Versatz achsparallel angeordnet). In dem Ausschnitt des Läufers 11 in **Fig. 10** erkennt man, dass die Permanentmagnete PM und die Eisenscheiben FE zwar die gewünschten geometrischen Abmessungen haben, aber die axiale Magnetisierung von einem der Permanentmagneten PM nicht homogen ist (geschwungener Pfeil). In **Fig. 11** erkennt man einen Ausschnitt eines Läufers 11, bei dem einer der Permanentmagneten PM eine von der axialen Richtung abweichende Magnetisierung aufweist. **Fig. 12** zeigt einen Ausschnitt aus einem Läufer 11, bei dem einer der Permanentmagnete PM eine unregelmässige Abweichung der geometrischen Form aufweist, ansonsten aber im wesentlichen die gewünschten geometrischen Abmessungen aufweist. Schliesslich zeigt **Fig. 13** einen Ausschnitt aus einem Läufer 11, bei dem entsprechend eine der Eisenscheiben FE eine unregelmässige Abweichung der geometrischen Form aufweist, ansonsten aber im wesentlichen die gewünschten geometrischen Abmessungen aufweist. Weitere Fälle, die zu einer Abweichung von der gewünschten idealen Verteilung des permanentmagnetisch erregten Feldes führen, sind denkbar, wobei ohnehin zu berücksichtigen ist, dass Bauteile immer Toleranzen aufweisen und die Darstellungen in Fig. 6 bis Fig. 13 stark idealisiert sind und lediglich prinzipiell erläutern sollen, wie es zu Abweichungen von der gewünschten idealen Verteilung des permanentmagnetisch erregten Feldes kommen kann.

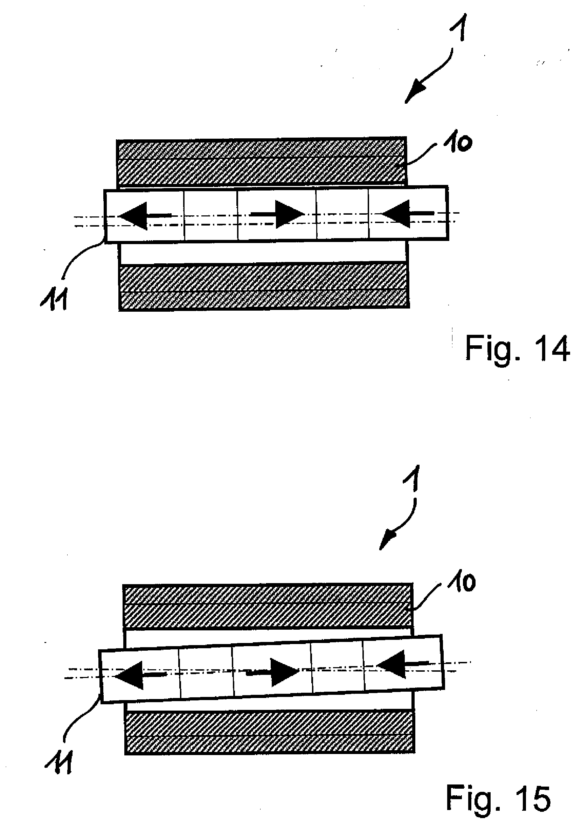

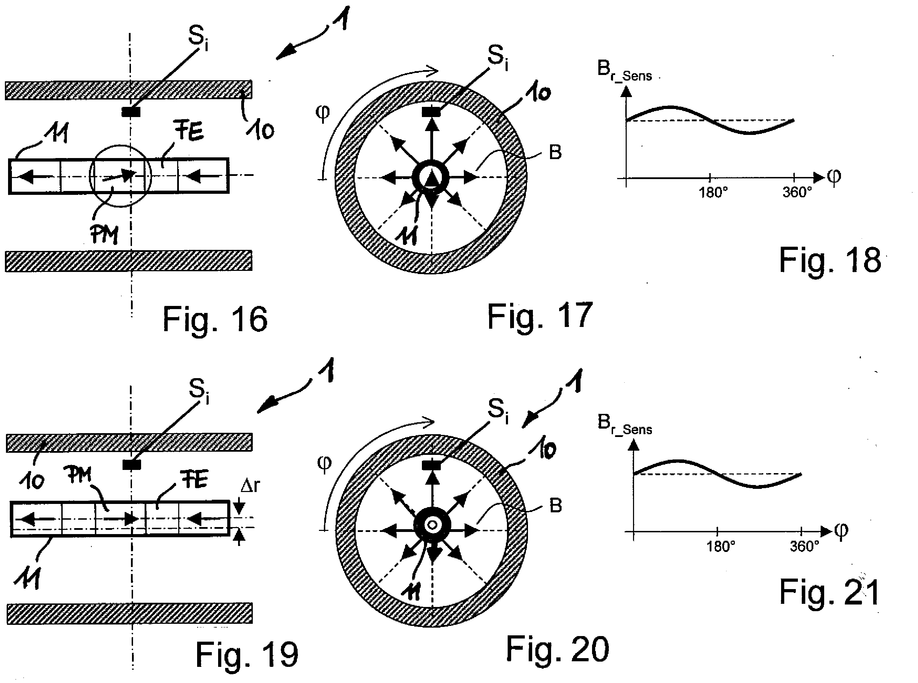

Die magnetische Induktion (Magnetfeldstärke) am Ort des Sensors ist im Betrieb nicht nur von der Axialposition des Läufers abhängig, sondern auch von einem möglichen radialen Versatz von Läufer- und Statorachse relativ zueinander. Dies ist beispielsweise in dem in **Fig. 14** gezeigten Ausschnitt aus einem Linearmotor 1 zu erkennen, bei dem der Läufer 11 achsparallel gegenüber der Achse des Stators 10 versetzt ist, siehe hierzu auch **Fig. 19** und **Fig. 20****,** wobei aus Fig. 20 die Feldverteilung besser zu erkennen ist. Wird der Läufer in radialer Richtung aus der Statormitte heraus auf die Sensoren zu bewegt - wie dies in Fig. 19 und Fig. 20 zu erkennen ist, in denen der axiale Versatz Δr zwischen der Achse des Läufers 11 und der Achse des Stators 10 dargestellt ist, nimmt die radiale Komponente Bᵣ der magnetische Induktion B (Magnetfeldstärke) am Ort der Sensoren Sᵢ betragsmässig zu (ausgenommen an den Symmetriepositionen, an denen die radiale Komponente Null ist). Wird der Läufer hingegen in radialer Richtung aus der Statormitte heraus von den Sensoren Sᵢ weg bewegt, nimmt die radiale Komponente Bᵣ der magnetischen Induktion B betragsmässig ab. Der Betrag der Zunahme bzw. Abnahme der Komponente Bᵣ ist natürlich abhängig vom Winkel ϕ, unter welchem der Sensor Sᵢ relativ zu dem axialen Versatz Δr angeordnet ist. Bei der Anordnung gemäss Fig. 19 und Fig. 20 ergibt sich dann ein vom Winkel ϕ abhängiger Verlauf der vom jeweiligen Sensor Sᵢ gemessenen radialen Komponente B_{r_sens} der magnetischen Induktion, wie er in **Fig. 21** dargestellt ist.

Auch eine Verkippung der Achse des Läufers 11 gegenüber der Achse des Stators 10 führt zu einer - wenn auch im Allgemeinen geringeren - Veränderung der magnetischen Induktion. Eine solche Verkippung der Achse des Läufers ist in **Fig. 15** dargestellt.

In **Fig. 16** ist ein Ausschnitt aus einem Linearmotor 1 gezeigt, bei dem einer der Permanentmagnete PM des Läufers 11 eine von der axialen Richtung abweichende Magnetisierung aufweist (zusätzliche diametrale Magnetisierungskomponente). Eine Anordnung des jeweiligen Sensors Sᵢ wie in Fig. 16 und **Fig. 17** gezeigt führt dann zu einer Abhängigkeit der vom jeweiligen Sensor Sᵢ gemessenen radialen Komponente der magnetischen Induktion B_{r_sens} wie dies in **Fig. 18** dargestellt ist.

Ist der Läufer in Bezug auf sein magnetisches Verhalten nicht rotationssymmetrisch aufgebaut (was im Allgemeinen der Fall ist), ist auch der jeweils aktuelle Rotationswinkel des Läufers dafür entscheidend, welche magnetische Induktion am Ort der Sensoren Sᵢ gemessen wird, es sei denn, der Läufer ist geführt und eine Rotation des Läufers um seine Achse ist nicht möglich. Im Allgemeinen ist jedoch die magnetische Induktion B auch vom jeweils aktuellen Rotationswinkel des Läufers um seine Achse (bzw. um die Achse des Stators) herum abhängig, um welchen die Sensoren Sᵢ angeordnet sind.

Eine zusätzliche diametrale Feldkomponente eines Permanentmagneten wird zum Beispiel die magnetische Induktion am Ort der Sensoren erhöhen, wenn sie dieselbe Richtung aufweist wie die durch die Axialmagnetisierung der Permanentmagnete erzeugte radiale Komponenten der magnetischen Induktion.

Wenn also der Läufer in Bezug auf seine Längsachse ein nicht-rotationssymmetrisches Magnetfeld aufweist und/oder sich im Stator neben der Hauptbewegungsrichtung auch in Querrichtung dazu bewegen lässt und/oder sich um alle Raumachsen verdrehen lässt, kann dies dazu führen und führt auch regelmässig dazu, dass es bei der Bestimmung der Läuferposition aus den Sensorsignalen SS1 und SS2 (siehe Fig. 1 bzw. Fig. 3) zu unerwünschten Fehlern kommen kann. Das rührt daher, dass dann mindestens einer der Sensoren ein gegenüber idealen Verhältnissen ein zu grosses oder zu kleines Magnetfeld (magnetische Induktion) misst, welches eigentlich einer von der tatsächlichen Läuferposition abweichenden Läuferposition entspricht. Es ist unmittelbar einleuchtend, dass sämtliche der vorstehend genannten Abhängigkeiten so klein wie möglich sein sollen, da in den Sensorsignalen bestimmungsgemäss nur die axiale Läuferposition abgebildet werden soll, und die Sensoren eigentlich nur auf die Veränderung der axialen Position des Läufers reagieren sollen.

Wie bereits erwähnt, ist bei gegebener axialer Position und bei gegebener radialer Position eines Sensors die Abweichung des Feldes gegenüber dem Idealfall abhängig vom aktuellen Rotationswinkel des Läufers. Da diese Feldabweichung an einem bestimmten axialen Ort über den gesamten Umfang häufig ungefähr sinusförmig verläuft, ergibt eine Mittelung aller Werte der magnetischen Feldstärke über den gesamten Umfang gegenüber einer punktuellen Messung mit nur einem Sensor an einem bestimmten Ort auf dem Umfang (nämlich an demjenigen Ort, wo der einzige Sensor angeordnet ist) eine erhebliche Reduktion der maximalen Feldabweichung. Eine Mittelung des Feldes über den Umfang am Ort der beiden Sensoren führt daher zu einem kleineren Fehler bei Bestimmung der Läuferposition.

Eine angenäherte Mittelung kann z.B. derart erreicht werden, wie dies in der WO 03/028194 beschrieben ist, nämlich indem mehrere Sensoren an einem bestimmten axialen Ort über den Umfang verteilt angeordnet sind und die Signale der einzelnen Sensoren anschliessend gemittelt werden. Da mit jedem Sensor aber nur ein einziger Wert für die Magnetfeldstärke gemessen wird, steigt die Qualität des gemittelten Wertes der Feldstärke in Bezug auf den exakten Mittelwert über den Umfang mit steigender Anzahl Sensoren, die über den Umfang verteilt sind. Allerdings steigen mit jedem zusätzlichen Sensor sowohl die Kosten, der Platzbedarf, als auch der Aufwand für die Auswertung der Sensorsignale. Darüber hinaus ist es möglich und sogar zu erwarten, dass bei der Signalführung und der Signalverarbeitung zum Zwecke der Mittelung der Sensorsignale zusätzliche Störungen eingekoppelt werden.

Der Erfindung liegt die Aufgabe zugrunde, eine Vorrichtung vorzuschlagen, die einerseits verhältnismässig wenig aufwändig ist, andererseits eine hohe Qualität bei der Bestimmung der tatsächlichen Läuferposition eines Linearmotors bietet.

Diese Aufgabe wird durch die erfindungsgemässe Vorrichtung gelöst, wie sie durch die Merkmale des unabhängigen Patentanspruchs 1 charakterisiert ist. Weiterbildungen der erfindungsgemässen Vorrichtung bilden den Gegenstand der abhängigen Patentansprüche.

Insbesondere umfasst die Vorrichtung zur Bestimmung der axialen Position des Läufers eines Linearmotors mindestens ein Paar von magnetisch leitenden, ringförmig ausgebildeten Elementen, die im wesentlichen koaxial und in einem geringen Abstand voneinander angeordnet sind, sodass zwischen ihnen ein Luftspalt gebildet wird, in welchem ein Magnetfeldsensor zur Messung des magnetischen Feldes im Luftspalt angeordnet ist. Dabei umschliessen im eingebauten Zustand die beiden ringförmig ausgebildeten Elemente den Läufer des Linearmotors (wobei der Läufer selbst jedoch nicht Bestandteil der erfindungsgemässen Vorrichtung ist).

Die ringförmigen magnetisch leitenden Elemente sind in einem geringen Abstand voneinander angeordnet, d.h. sie berühren sich nicht. Sie bilden idealerweise "Äquipotentialringe", d.h. das magnetische Potential ist über das jeweilige ringförmige Element betrachtet gleich. Zwischen den beiden ringförmigen Elementen existiert eine magnetische Potentialdifferenz oder magnetische Spannung, welche sich in dem Magnetfeld im Luftspalt zwischen den beiden Ringen abbildet, wo der Magnetfeldsensor angeordnet ist, der dieses Magnetfeld misst. Da die sich einstellende Potentialdifferenz zwischen den beiden ringförmigen Elementen von der Läuferposition abhängig ist, ist auch das mit dem Magnetfeldsensor gemessene Magnetfeld im Luftspalt zwischen den beiden ringförmigen Elementen abhängig von der jeweiligen Läuferposition.

Betrachtet man nun beispielsweise eines der beiden ringförmigen Elemente eines solchen Paares und nimmt man an, dass der Läufer radial zur Statorachse versetzt ist oder die Permanentmagnete des Läufers ausser der axialen Magnetisierung auch eine diametrale Magnetisierung aufweisen, wird sich der in das betrachtete eine ringförmige Element eintretende magnetische Fluss auf der einen Seite aufgrund der zunehmenden Feldstärke (bzw. der zunehmenden magnetischen Induktion) erhöhen, auf der anderen Seite jedoch aufgrund der abnehmenden Feldstärke verringern, sodass sich der gesamte in das betrachtete ringförmige Element eintretende (oder austretende) magnetische Fluss nur geringfügig ändert. Da die ringförmigen Elemente magnetisch leitend sind (und somit quasi einen magnetischen "Kurzschluss" darstellen), ist das magnetische Potential über den Umfang des ringförmigen Elements betrachtet stets gleich.

Ähnlich wie sich der in das betrachtete eine ringförmige Element eintretende (oder austretende) magnetische Fluss wenn überhaupt, dann nur geringfügig ändert, ändert sich analog auch der aus dem anderen ringförmigen Element des gleichen Paares austretende (oder eintretende) magnetische Fluss allenfalls nur geringfügig, sodass die magnetische Spannung zwischen den beiden ringförmigen Elementen des Paares (aufgrund des ebenfalls unveränderten magnetischen Widerstandes zwischen den Ringen) mehr oder weniger unverändert bleibt.

Auch eine Rotation des Läufers um seine Längsachse führt nicht zu einer Feldänderung im Luftspalt, da die Feldverteilung lediglich mit rotiert und sich somit am gesamten in die ringförmigen Elemente eines Paares eintretenden bzw. austretenden magnetischen Fluss nichts ändert. Die geänderte räumliche Verteilung des in das eine magnetisch leitende ringförmige Element eintretenden magnetischen Flusses bzw. diejenige des aus dem anderen ringförmigen Element des Paares austretenden magnetischen Flusses wird nämlich jeweils über den "magnetischen Kurzschluss" wieder ausgeglichen. Somit bleibt das magnetische Potential der beiden ringförmigen Elemente unverändert, und folglich ändert sich auch die magnetische Spannung zwischen den beiden ringförmigen Elementen nicht.

Mit der erfindungsgemässen Vorrichtung ist es somit möglich, eine hohe Qualität bei der Bestimmung der tatsächlichen Läuferposition zu erreichen, da diejenigen Effekte, die zu Ungenauigkeiten bei der Bestimmung der Läuferposition führen können, eliminiert oder zumindest ganz erheblich reduziert werden. Gleichzeitig ist die erfindungsgemässe Vorrichtung vom Aufwand her verhältnismässig wenig aufwändig (z.B. wird nur ein einziger Sensor im Luftspalt des jeweiligen Paares von ringförmigen Elementen benötigt, was auch eine verhältnismässig einfache Signalführung und eine verhältnismässig wenig aufwändige Auswertung der Signale ermöglicht). Insbesondere ist es möglich, die eingangs beschriebenen negativen Effekte (z.B. achsparallele radiale Verschiebung des Läufers aus der Mitte der ringförmigen Elemente, nicht-rotationssymmetrische Magnetisierung der Permanentmagnete) im Hinblick auf eine möglichst exakte Bestimmung der tatsächlichen Läuferposition mit Hilfe einer Sinus-Cosinus-Auswertung (siehe oben) entweder vollständig zu kompensieren oder aber ganz erheblich zu reduzieren.

Bei einem Ausführungsbeispiel der erfindungsgemäsen Vorrichtung sind mindestens zwei Paare von magnetisch leitenden, ringförmigen Elementen vorgesehen, wobei bei benachbart angeordneten Paaren zwei ringförmige Elemente von verschiedenen Paaren ein gemeinsames ringförmigen Element bilden, welches jeweils beiden Paaren zugeordnet ist.

Hierbei handelt es sich um eine konstruktiv platzsparende und auch fertigungstechnisch wenig aufwändige vorteilhafte Ausbildung der erfindungsgemässen Vorrichtung. Ganz allgemein lässt sich sagen, dass für eine Anzahl n von Magnetfeldsensoren (und somit n Luftspalte) mindestens eine Anzahl n+1 von ringförmigen Elementen vorhanden sein muss, aber grundsätzlich auch nicht mehr als n+1 ringförmige Elemente, was ein solches Ausführungsbeispiel besonders platzsparend und fertigungstechnisch wenig aufwändig macht.

Bei einem Ausführungsbeispiel der erfindungsgemässen Vorrichtung ist jeweils mindestens eines der ringförmigen Elemente des jeweiligen Paares von ringförmigen Elementen in Umfangsrichtung betrachtet nicht vollständig geschlossen ausgebildet. Dies kann beispielsweise von Vorteil sein, wenn die ringförmigen magnetisch leitenden Elemente z.B. aus produktionstechnischen Gründen (oder auch aus konstruktiven Gründen) nicht vollständig geschlossen sein können. An der grundsätzlichen Wirkungsweise der Vorrichtung ändert sich dadurch nichts, weil das jeweilige magnetisch leitende ringförmige Element ja nach wie vor unterschiedliche Verteilungen des in das eine ringförmige Element eintretenden bzw. aus dem anderen ringförmigen Element austretenden magnetischen Flusses über den Umfang des jeweiligen Elements ausgleicht ("kurzschliesst"), sodass das jeweilige ringförmige Element, unabhängig davon, ob es vollständig geschlossen ist oder nicht, einen magnetischen "Äquipotentialring" bildet. Zu beachten ist dabei allerdings, dass die Sättigungsgrenze des jeweiligen ringförmigen Elements nicht erreicht oder überschritten wird, da ansonsten der Ausgleichsvorgang ("Kurzschluss") über den Umfang des jeweiligen ringförmigen Elements nicht oder nicht vollständig erfolgt (und das Element somit keinen "Äquipotentialring" mehr darstellt).

Bei einem anderen Ausführungsbeispiel der erfindungsgemässen Vorrichtung ist der Querschnitt von mindestens einem der ringförmigen Elemente des jeweiligen Paares von ringförmigen Elementen in Umfangsrichtung betrachtet nicht gleichmässig ausgebildet. Dies kann ebenfalls aus produktionstechnischen Gründen vorteilhaft sein, aber auch in Bezug auf die Anordnung des Magnetfeldsensors. Beispielweise kann in einem ringförmigen Element auf der Seite des Luftspaltes zusätzlich eine Aussparung vorgesehen sein, in welcher der Sensor angeordnet ist. Auch hier ist zu beachten, dass durch die Querschnittsänderung die Sättigungsgrenze des jeweiligen ringförmigen Elements nicht erreicht oder überschritten wird, da ansonsten der Ausgleichsvorgang ("Kurzschluss") über den Umfang des jeweiligen ringförmigen Elements nicht oder nicht vollständig erfolgt (und das Element somit keinen "Äquipotentialring" mehr darstellt). Grundsätzlich kann der Querschnitt des jeweiligen ringförmigen Elements beispielsweise rechteckig ausgebildet sein. Die der magnetischen Quelle (z.B. den Permanentmagneten im Läufer) zugewandten Oberflächen (bzw. alle Oberflächen, von bzw. zu denen keine Feldlinien direkt zum bzw. vom benachbarten Ring verlaufen) der ringförmigen Elemente sind rotationssymmetrisch ausgebildet, während die anderen Oberflächen der ringförmigen Elemente (z.B. diejenigen, die an den Luftspalt grenzen, in welchem der Sensor angeordnet ist) auch abweichend von der Rotationssymmetrie ausgebildet sein können.

Bei einem weiteren Ausführungsbeispiel der erfindungsgemässen Vorrichtung sind die beiden ringförmigen Elemente des jeweiligen Paares, zwischen denen der Luftspalt gebildet wird, in welchem der Sensor angeordnet ist, koaxial in einem radialen Abstand voneinander angeordnet. Dies ist ebenfalls eine konstruktiv einfache und platzsparende Variante.

Bei einem anderen Ausführungsbeispiel der erfindungsgemässen Vorrichtung sind die beiden ringförmigen Elemente des jeweiligen Paares, zwischen denen der Luftspalt gebildet wird, koaxial in einem axialen Abstand voneinander angeordnet. Dies ist eine Alternative zu der Variante, bei der die ringförmigen Elemente des jeweiligen Paares in radialem Abstand voneinander angeordnet sind. Ebenso ist es möglich, die ringförmigen Elemente des jeweiligen Paares sowohl in einem radialen Abstand voneinander als auch gleichzeitig in axialem Abstand voneinander anzuordnen. Alle diese Varianten werden weiter unten noch genauer erläutert.

Bei einem weiteren Ausführungsbeispiel der erfindungsgemässen Vorrichtung sind zwei Paare von ringförmigen Elementen vorgesehen, welche in axialer Richtung in einem vordefinierten Abstand voneinander angeordnet sind. Zwei Paare sind für eine Sinus-Cosinus-Auswertung erforderlich, wobei der vordefinierte Abstand der beiden Paare voneinander - magnetisch betrachtet - optimalerweise ungefähr einem Viertel einer magnetischen Periode entspricht (quasi 90°) bzw. ungefähr einem Viertel einer magnetischen Periode plus einem ganzzahligen Vielfachen einer halben magnetischen Periode.

Bei einer Weiterbildung der Variante, bei der die beiden ringförmigen Elemente in axialem Abstand voneinander angeordnet sind (entweder in einem rein axialen Abstand voneinander oder in axialem und radialem Abstand voneinander), sind die zwei in axialer Richtung benachbart angeordneten ringförmigen Elemente der beiden verschiedenen Paare von ringförmigen Elementen durch ein beiden Paaren zugeordnetes, gemeinsames ringförmiges Element gebildet. Mit anderen Worten gesagt, sind die beiden benachbart angeordneten ringförmigen Elemente der verschiedenen Paare zu einem gemeinsamen ringförmigen Element zusammengefasst.

Ein weiterer Aspekt der Erfindung betrifft einen Linearmotor mit einem Stator und einem relativ zum Stator axial verschiebbaren Läufer, sowie mit einer Vorrichtung zur Bestimmung der axialen Position des Läufers, wie sie in den vorstehend beschriebenen verschiedenen Varianten genannt ist. Dabei umschliessen die beiden ringförmig ausgebildeten Elemente den Läufer des Linearmotors.

Häufig sind Linearmotoren mit einer weichmagnetischen (magnetisch leitenden) Abschirmung in Form eines Rohrs versehen. Dieses Rohr dient einerseits als Rückschlussrohr zur Führung des permanentmagnetisch erregten bzw. elektromagnetisch erregten magnetischen Flusses des Linearmotors und andererseits als Abschirmung des Linearmotors vor äusseren Magnetfeldern bzw. zum Schutz der Umgebung von Magnetfeldern, die vom Linearmotor erzeugt werden. Ein Ausführungsbeispiel des erfindungsgemässen Linearmotors ist daher mit einem solchen magnetisch leitenden Rückschlussrohr versehen, welches zumindest die Vorrichtung zur Bestimmung der axialen Position des Läufers umschliesst.

Bei einer Weiterbildung dieses Ausführungsbeispiels des erfindungsgemässen Linearmotors, bei welchem die beiden ringförmigen Elemente des jeweiligen Paares von ringförmigen Elementen der Vorrichtung zur Bestimmung der axialen Position des Läufers in einem radialen Abstand voneinander angeordnet sind, wird das radial äussere ringförmige Element des jeweiligen Paares von ringförmigen Elementen durch das magnetisch leitende Rückschlussrohr gebildet. Die jeweiligen radial äusseren ringförmigen Elemente können dadurch eingespart und durch das (ohnehin vorhandene) Rückschlussrohr ersetzt werden. Dieses Ausführungsbeispiel ist konstruktiv einfach, wirtschaftlich und platzsparend. Dabei kann beispielsweise in dem Rückschlussrohr eine durchgehende axiale Nut vorgesehen sein, in welcher die Magnetfeldsensoren angeordnet sind. In dieser Nut können auch die Sensorsignale nach aussen geführt werden. Die Nut kann auch primär der Sensorsignalführung dienen, während die Magnetfeldsensoren nicht in der Nut angeordnet sind.

Bei einem weiteren Ausführungsbeispiel des erfindungsgemässen Linearmotors weist das magnetische Rückschlussrohr eine radiale Vertiefung auf, in welcher die Vorrichtung zur Bestimmung der axialen Position des Läufers angeordnet ist, wobei jeweils das radial innere ringförmige Element des jeweiligen Paares von ringförmigen Elementen derart in der Vertiefung angeordnet ist, dass es auf der Höhe der Rohrwand des Rückschlussrohres ausserhalb der Vertiefung angeordnet ist. Dadurch ist eine Flussführung mit kleinen Luftspalten und eine Reduktion der axialen Reluktanzkraft möglich.

Weitere vorteilhafte Aspekte der erfindungsgemässen Vorrichtung bzw. des erfindungsgemässen Linearmotors ergeben sich aus der nachfolgenden Beschreibung von Ausführungsbeispielen mit Hilfe der Zeichnung. Es zeigen:
- Fig. 1: eine schematische Darstellung des prinzipiellen Aufbaus eines Linearmotors mit zwei Sensoren zur Bestimmung der Läuferposition,
- Fig. 2: den örtlichen Verlauf der radialen Komponenten der magnetischen Induktion bei dem Linearmotor gemäss Fig. 1,
- Fig. 3: den zeitlichen Verlauf der beiden Sensorsignale der beiden Sensoren über der Zeit,
- Fig. 4: den Verlauf der magnetischen Induktion am Ort des Sensors S1 in einem Querschnitt durch den Linearmotor,
- Fig. 5: den Verlauf der magnetischen Induktion am Ort des Sensors S2 in einem Querschnitt durch den Linearmotor,
- Fig. 6 - Fig. 13: verschiedene Ausführungsbeispiele von Läufern und deren Elementen, welche zu einer Abweichung von der rotationssymmetrischen Feldverteilung führen,
- Fig. 14: ein Ausschnitt aus einem Linearmotor, bei dem der Läufer achsparallel zur Statorachse versetzt ist und so im Motorinnern zu einer nicht rotationssymmetrischen Feldverteilung führt,
- Fig. 15: ein Ausschnitt aus einem Linearmotor, bei dem die Achse des Läufers relativ zur Achse des Stators verkippt ist und so im Motorinnern zu einer nicht rotationssymmetrischen Feldverteilung führt,
- Fig. 16: ein Ausschnitt aus einem Linearmotor, bei dem einer der Permanentmagnete auch eine diametrale Komponente in der Magnetisierung aufweist,
- Fig. 17: den Verlauf der radialen Komponente der magnetischen Induktion am Ort des Sensors Sᵢ aus Fig. 16 in einem Querschnitt,
- Fig. 18: den Verlauf der vom Sensor Sᵢ aus Fig. 17 gemessenen radialen Komponente der magnetischen Induktion in Abhängigkeit des Winkels ϕ der Anordnung des Sensors Sᵢ,
- Fig. 19: einen Ausschnitt eines Linearmotors bei dem der Läufer achsparallel zur Achse des Stators versetzt ist,
- Fig. 20: den Verlauf der radialen Komponente der magnetischen Induktion am Ort des Sensors Sᵢ aus Fig. 19 in einem Querschnitt,
- Fig. 21: den Verlauf der vom Sensors Sᵢ aus Fig. 20 gemessenen radialen Komponente der magnetischen Induktion in Abhängigkeit des Winkels ϕ der Anordnung des Sensors Sᵢ,
- Fig. 22: ein erstes Ausführungsbeispiel der Vorrichtung zur Bestimmung der Läuferposition eines Linearmotors gemäss der Erfindung, mit in geringem Abstand voneinander angeordneten ringförmigen magnetisch leitenden Elementen,
- Fig. 23: das Magnetfeld eines auch diametral magnetisierten Permanentmagneten des Läufers eines Linearmotors aus Fig. 22,
- Fig. 24: einen Ausschnitt des Luftspalts zwischen den beiden ringförmigen Elementen aus Fig. 23 mit einem zwischen den Elementen angeordneten Magnetfeldsensor,
- Fig. 25: ein zweites Ausführungsbeispiel einer erfindungsgemässen Vorrichtung mit zwei Paaren von ringförmigen Elementen, die jeweils koaxial und in einem radialen Abstand voneinander angeordnet sind,
- Fig. 26: einen Ausschnitt aus einem Linearmotor mit einer Vorrichtung gemäss Fig. 25, die in einem Rückschlussrohr des Linearmotors angeordnet ist,
- Fig. 27: einen Ausschnitt aus einem Linearmotor, bei dem die beiden radial äusseren ringförmigen Elemente der erfindungsgemässen Vorrichtung gemäss Fig. 26 durch das Rückschlussrohr des Linearmotors ersetzt sind,
- Fig. 28: einen Ausschnitt aus einem Linearmotor mit einer Vorrichtung ähnlich Fig. 27, wobei jedoch das Rückschlussrohr eine radiale Vertiefung aufweist und das radial innere ringförmige Element im wesentlichen auf der Höhe der Rohrwand des Rückschlussrohres angeordnet ist,
- Fig. 29: ein drittes Ausführungsbeispiel der erfindungsgemässen Vorrichtung mit zwei Paaren von ringförmigen Elementen, die jeweils in einem axialen Abstand voneinander angeordnet sind,
- Fig. 30: einen Ausschnitt aus einem Linearmotor mit einer Vorrichtung gemäss Fig. 29, wobei die beiden in axialer Richtung benachbart angeordneten ringförmigen Elemente der beiden Paare von ringförmigen Elemente ein gemeinsames ringförmiges Element bilden,
- Fig. 31: einen Ausschnitt aus dem Ausführungsbeispiel gemäss Fig. 27 am Ort eines Sensors, wobei ein Permanentmagnet des Läufers auch eine diametrale Komponente in der Magnetisierung aufweist,
- Fig. 32: die radiale Komponente der magnetischen Induktion im Luftspalt gemäss Fig. 31 in Abhängigkeit vom Winkel ϕ,
- Fig. 33: die in Fig. 32 vom Magnetfeldsensor gemessene magnetische Induktion im Luftspalt in Abhängigkeit des Winkels ϕ der Anordnung des Sensors Sᵢ,
- Fig. 34: einen Ausschnitt aus dem Ausführungsbeispiel gemäss Fig. 27 bei achsparallel radial relativ zur Achse des Stators versetztem Läufer,
- Fig. 35: die radiale Komponente der magnetischen Induktion im Luftspalt gemäss Fig. 34 in Abhängigkeit vom Winkel ϕ,
- Fig. 36: die in Fig. 35 vom Magnetfeldsensor gemessene magnetische Induktion im Luftspalt in Abhängigkeit des Winkels ϕ der Anordnung des Sensors Sᵢ,
- Fig. 37: ein viertes Ausführungsbeispiel ähnlich demjenigen aus Fig. 22, wobei jedoch ein ringförmiges Element nicht vollständig geschlossen ist und das andere ringförmige Element eine Querschnittsänderung (Kerbe) aufweist,
- Fig. 38: einen Ausschnitt aus einem Linearmotor ähnlich Fig. 27, wobei jedoch das Rückschlussrohr eine axiale Nut aufweist, in welcher die Magnetfeldsensoren angeordnet sind,
- Fig. 39: eine Seitenansicht des Ausschnitts des Linearmotors entsprechend Fig. 38,
- Fig. 40: ein Ausführungsbeispiel der erfindungsgemässen Vorrichtung mit zwei Paaren von ringförmigen Elementen, wobei zwei benachbart angeordneten ringförmige Elemente von verschiedenen Paaren ein gemeinsames ringförmiges Element bilden
und
- Fig. 41: das Ausführungsbeispiel aus Fig. 40 in einer Querschnittsdarstellung.

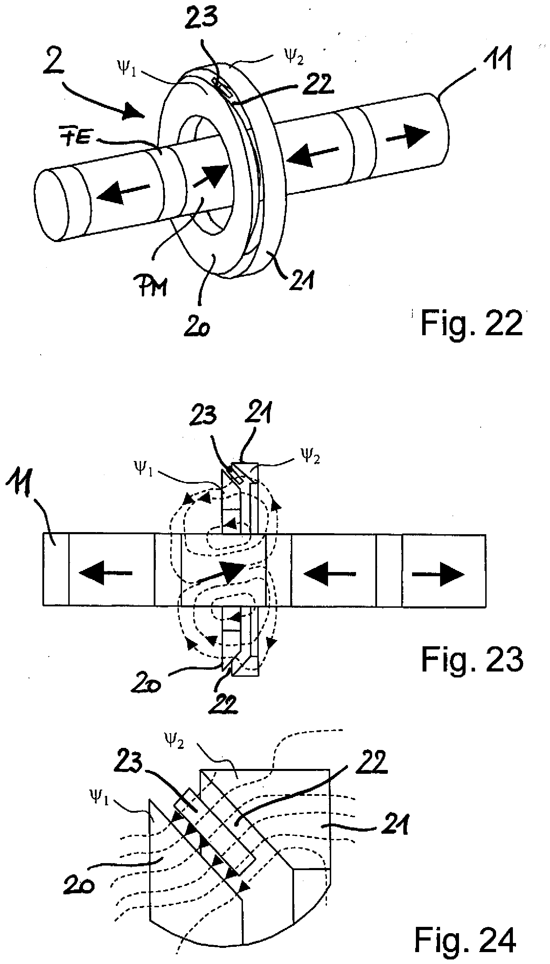

In **Fig. 22** ist ein erstes Ausführungsbeispiel einer erfindungsgemässen Vorrichtung 2 zu erkennen, welches ein Paar von magnetisch leitenden ringförmigen Elementen 20,21 in Form von geschlossenen weichmagnetischen Ringen umfasst. Ferner erkennt man in Fig. 22 den Läufer 11 eines Linearmotors, der einen Permanentmagneten PM aufweist, welcher eine nicht-rotationssymmetrische Magnetisierung (mit diametraler Magnetisierungskomponente) aufweist. Die ringförmigen Elemente 20,21 sind in einem (sowohl axialen als auch radialen) Abstand voneinander angeordnet und definieren einen Luftspalt 22 zwischen ihnen, in welchem ein Magnetfeldsensor 23 angeordnet ist. Die beiden weichmagnetischen Ringe 20,21 weisen von der Magnetisierung der Permanentmagnete PM des Läufers hervorgerufene unterschiedliche magnetische Potentiale ψ₁ und ψ₂ auf.

**Fig. 23** zeigt den Verlauf des Magnetfelds des auch eine diametrale Magnetisierungskomponente aufweisenden Permanentmagneten PM aus Fig. 22. Man erkennt, dass die magnetischen Potentiale ψ₁ und ψ₂ verschieden sind, und somit eine magnetische Spannung zwischen den beiden Ringen 20,21 existiert. Diese magnetische Spannung wird in das Luftspaltfeld abgebildet, und mit Hilfe des Magnetfeldsensors 23 wird die jeweilige daraus resultierende magnetische Induktion im Luftspalt 22 gemessen. Die Grösse der magnetischen Spannung (bzw. der daraus resultierenden magnetischen Induktion im Luftspalt) ist abhängig von der axialen Position des Läufers und dient umgekehrt zur Ermittlung der jeweils aktuellen axialen Position des Läufers. **Fig. 24** zeigt einen Ausschnitt des Luftspalts 22 zwischen den beiden Ringen 20,21 sowie den in diesem Luftspalt 22 angeordneten Magnetfeldsensor 23.

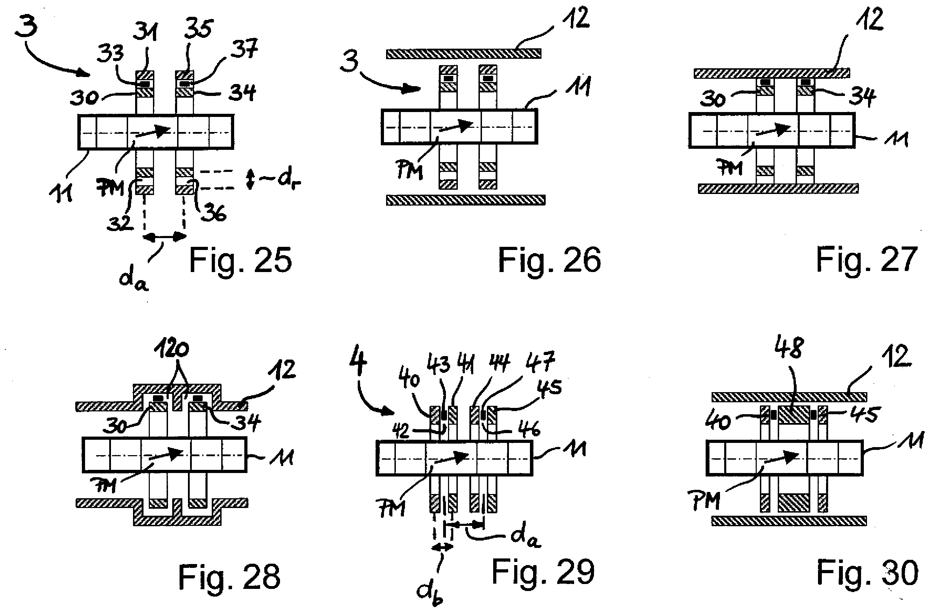

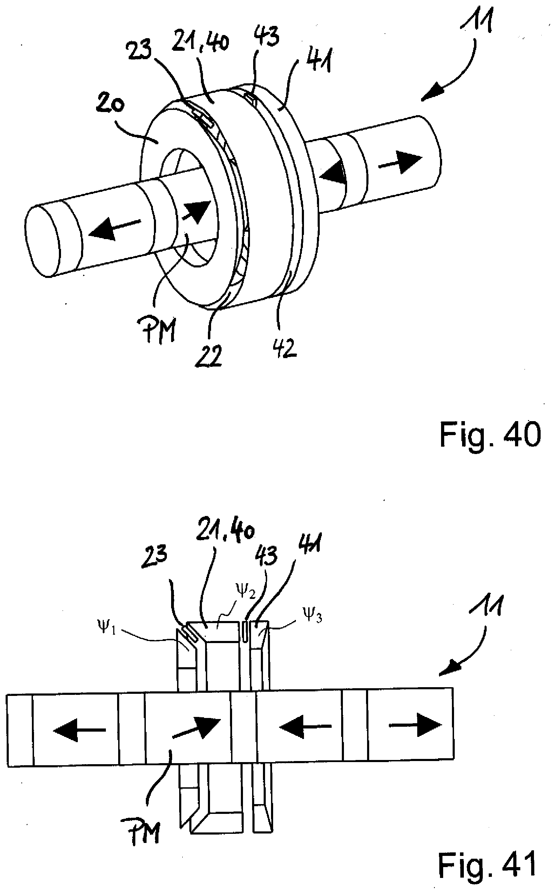

Die Funktionsweise der Vorrichtung 2 wird weiter unten noch näher erläutert, zunächst wird jedoch der prinzipielle Aufbau eines vorteilhaften Ausführungsbeispiels und danach der konstruktive von einigen weiteren vorteilhaften Ausführungsbeispielen der erfindungsgemässen Vorrichtung näher betrachtet. Das Ausführungsbeispiel gemäss **Fig. 40** und **Fig. 41** ist im Grunde eine Kombination des Ausführungsbeispiels gemäss Fig. 22 mit einem Paar von ringförmigen Elementen des Ausführungsbeispiels gemäss Fig. 29 (siehe weiter unten), wobei das ringförmige Element 20 aus Fig. 22 und das ringförmige Element 41 aus Fig. 29 beibehalten sind, während das ringförmige Element 21 des Paares 20,21 (Fig. 22) und das ringförmige Element 40 des Paares 40,41 (Fig. 29) ein gemeinsames ringförmiges Element bilden, welches beiden Paaren zugeordnet ist. In den jeweiligen Luftspalten 22 bzw. 42 sind die Magnetfeldsensoren 23 bzw. 43 angeordnet. Dies ist ein prinzipielles und gleichzeitig besonders platzsparende und fertigungstechnisch wenig aufwändiges Ausführungsbeispiel. Die ringförmigen Elemente 20, das gemeinsame Element 21 bzw. 40, sowie das ringförmige Element 41 weisen die magnetischen Potentiale ψ₁ bzw. ψ₂ bzw. ψ₃ auf.

Obgleich in Fig. 40 und Fig. 41 nur ein Ausführungsbeispiel von zwei Paaren von ringförmigen Elementen (und also zwei Magnetfeldsensoren) gezeigt ist, lässt sich ganz allgemein sagen, dass für eine Anzahl von n Magnetfeldsensoren (und also für eine Anzahl von n Luftspalten) eine Mindestanzahl n+1 ringförmiger Elemente erforderlich ist, aber auch nicht mehr als n+1. Zwar ist es möglich, mehr als n+1 ringförmige Elemente vorzusehen - und je nach Anwendungsfall mag das sogar vorteilhaft sein - aber die Mindestanzahl an ringförmigen Elementen für n Magnetfeldsensoren ist n+1.

Bei dem in **Fig. 25** gezeigten zweiten Ausführungsbeispiel der erfindungsgemässen Vorrichtung 3 sind zwei Paare von magnetisch leitenden, ringförmigen Elementen 30,31 bzw. 34,35 vorgesehen, die jeweils koaxial in einem radialen Abstand dᵣ voneinander angeordnet sind, sodass zwischen Ihnen der jeweilige Luftspalt 32,36 gebildet wird, in welchem der jeweilige Magnetfeldsensor 33,37 angeordnet ist. Die beiden Paare von ringförmigen Elementen sind in einem vordefinierten axialen Abstand dₐ voneinander angeordnet. Dieser axiale Abstand dₐ entspricht ungefähr einem Viertel einer magnetischen Periode (bzw. ungefähr einem Viertel einer magnetischen Periode plus einem ganzzahligen Vielfachen der Hälfte einer magnetischen Periode), sodass die Bestimmung der aktuellen Position des Läufers 11 mit Hilfe einer allenfalls angepassten Sinus-Cosinus-Auswertung erfolgen kann.

In **Fig. 26** ist ein Ausschnitt aus einem Linearmotor dargestellt, der mit einem Rückschlussrohr 12 versehen ist, in welchem das Ausführungsbeispiel der erfindungsgemässen Vorrichtung 3 aus Fig. 25 angeordnet ist. Das Rückschlussrohr 12 dient bei dem Linearmotor einerseits dem magnetischen Rückschluss, andererseits der Abschirmung des Linearmotors von störenden Feldern von aussen bzw. der Abschirmung der Umgebung des Linearmotors von magnetischen Feldern, die im Linearmotor erzeugt werden.

In **Fig. 27** ist ein Ausschnitt aus einem Linearmotor dargestellt, bei dem das Rückschlussrohr 12 die beiden radial äusseren Ringe 31,35 der Vorrichtung 3 ersetzt, was dieses Ausführungsbeispiel besonders platzsparend und produktionstechnisch weniger aufwändig macht.

In **Fig. 28** ist ein Ausschnitt aus einem Linearmotor dargestellt mit einer Vorrichtung ähnlich Fig. 27. Allerdings weist das Rückschlussrohr 12 hier eine radiale Vertiefung 120 auf, in welcher der radial innere Ring 30,34 auf der Höhe der Rohrwand des Rückschlussrohrs 12 angeordnet ist, wenn man die Rohrwand des Rückschlussrohrs 12 ausserhalb der radialen Vertiefung 120 betrachtet. Dieses Ausführungsbeispiel zeichnet sich durch besonders geringe Reluktanzkräfte aus.

In **Fig. 29** ist ein drittes Ausführungsbeispiel einer erfindungsgemässen Vorrichtung 4 dargestellt, bei welchem zwei Paare von magnetisch leitenden, ringförmigen Elementen 40,41 bzw. 44,45 vorgesehen sind, die jeweils koaxial in einem axialen Abstand d_{b} voneinander angeordnet sind, sodass zwischen Ihnen der jeweilige Luftspalt 42,46 gebildet wird, in welchem der jeweilige Magnetfeldsensor 43,47 angeordnet ist. Die beiden Paare von ringförmigen Elementen sind in einem vordefinierten axialen Abstand dₐ voneinander angeordnet. Dieser axiale Abstand dₐ entspricht idealerweise ungefähr einem Viertel einer magnetischen Periode (bzw. einem Viertel einer magnetischen Periode plus einem ganzzahligen Vielfachen der Hälfte einer magnetischen Periode), sodass die Bestimmung der aktuellen Position des Läufers 11 mit Hilfe einer allenfalls angepassten Sinus-Cosinus-Auswertung erfolgen kann.

In **Fig. 30** ist ein Ausschnitt aus einem Linearmotor dargestellt mit einer Vorrichtung 4 gemäss Fig. 29, die in einem Rückschlussrohr 12 angeordnet ist, wobei jedoch im Unterschied zu der Vorrichtung aus Fig. 29 die beiden benachbart angeordneten Ringe 41,44 der beiden Paare von Ringen einen gemeinsamen (zylindrischen) Ring 48 bilden, der beiden Paaren von Ringen zugeordnet ist.

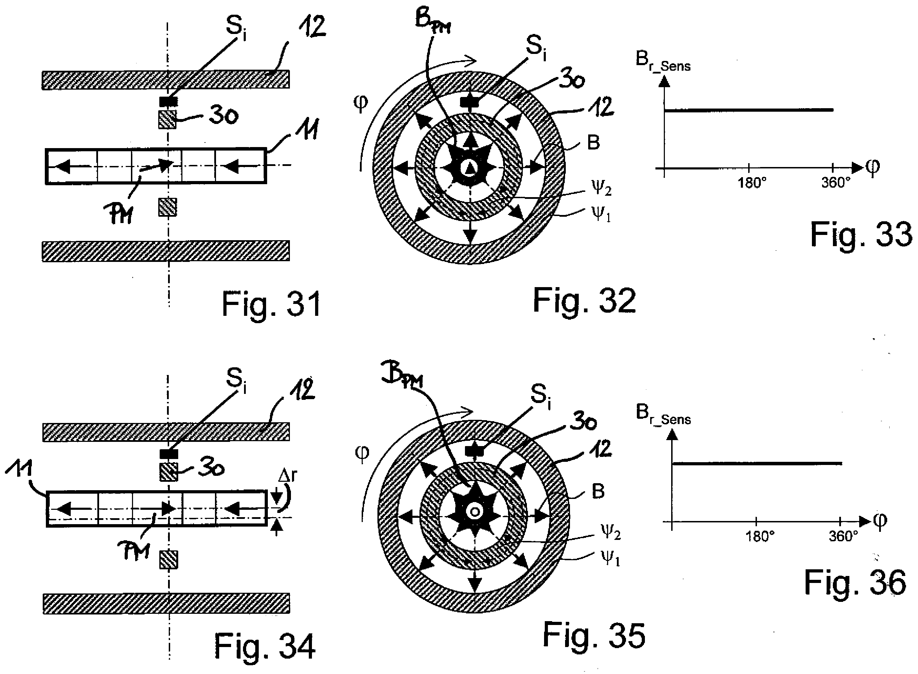

Im Folgenden soll anhand von Fig. 31 bis Fig. 33 die grundsätzliche Funktionsweise der erfindungsgemässen Vorrichtung erläutert werden, wobei zur Erläuterung das Ausführungsbeispiel gemäss Fig. 27 am Ort eines Sensors Sᵢ, der entweder der Sensor 33 oder der Sensor 37 sein kann, herangezogen wird. Die Funktionsweise der anderen Ausführungsbeispiele ist aber grundsätzlich ähnlich, weil die Kompensationsvorgänge in äquivalenter Weise erfolgen.

Im Folgenden wird beispielsweise der Ort betrachtet, an welchem der Sensor 33 als Sensor Sᵢ angeordnet ist. In **Fig. 31** erkennt man den Läufer 11 mit dem auch eine diametrale Magnetisierungskomponente aufweisenden Permanentmagneten PM, der ein Magnetfeld mit einer magnetischen Induktion B_{PM} erzeugt, dessen betragliche Grösse vom Winkel ϕ abhängig ist, wie dies in **Fig. 32** zu erkennen ist. Das von der nicht-rotationssymmetrisch verteilten magnetischen Induktion B_{PM} im radial inneren Ring 30 hervorgerufene magnetische Potential ist zwar zunächst abhängig vom Winkel ϕ, da der Ring 30 jedoch magnetisch sehr gut leitend ist und somit näherungsweise einen magnetischen "Kurzschluss" darstellt, wird dadurch eine allfällig unterschiedliche Potentialverteilung sofort ausgeglichen, sodass der radial innere Ring 30 unabhängig vom Winkel ϕ das konstante magnetische Potential ψ₂ aufweist. In gleicher Weise weist das Rückschlussrohr 12 unabhängig vom Winkel ϕ das magnetische Potential ψ₁ auf. Somit ist die betragliche Grösse der magnetischen Induktion B (es wird jeweils nur die radiale Komponente Bᵣ betrachtet, weil nur diese vom Magnetfeldsensor gemessen wird) im Luftspalt zwischen dem radial inneren Ring 30 und dem Rückschlussrohr 12, also dort, wo der Sensor Sᵢ (bei dem hier betrachteten Ort der Sensor 33) angeordnet ist, nicht mehr vom (Umfangs-) Winkel ϕ abhängig. Dadurch ist der Einfluss der diametralen Komponente der Magnetisierung des Permanentmagneten PM kompensiert, sodass die vom Magnetfeldsensor Sᵢ gemessene Flussdichte B_{r_sens} nicht mehr vom Winkel ϕ abhängig ist. Dies wird aus der Darstellung der vom Magnetfeldsensor gemessenen magnetischen Induktion B_{r_Sens} über dem Winkel ϕ ersichtlich, wie dies in **Fig. 33** dargestellt ist. Dabei ist allerdings zu beachten, dass sowohl der radial innere Ring 30 als auch das Rückschlussrohr 12 jeweils nicht in die magnetische Sättigung gehen dürfen, da sonst der magnetische Kurzschluss (Ausgleichsvorgang) nicht mehr erfolgen kann und somit das magnetische Potential ψ₂ des radial inneren Rings 30 bzw. das magnetische Potential ψ₁ des Rückschlussrohrs nicht mehr unabhängig vom Winkel ϕ sind und somit auch die dadurch hervorgerufene magnetische Induktion B im Luftspalt nicht mehr unabhängig vom Winkel ϕ ist, sodass die vom Magnetfeldsensor Sᵢ gemessene magnetische Induktion B_{r_Sens} ebenfalls abhängig vom Winkel ϕ wäre.

Ein weiterer Fall, wie eine nicht-rotationssymmetrische Verteilung der von dem Permanentmagneten PM erzeugten magnetischen Induktion B_{PM} verursacht sein kann (obwohl natürlich die magnetische Induktion nicht nur von einem einzelnen Permanentmagneten des Läufers erzeugt wird, wird hier beispielhaft nur die von dem einzelnen Permanentmangeten PM erzeugte magnetische Induktion betrachtet), ist in **Fig. 34** dargestellt. Dort ist die Achse des Läufers 11 um den Betrag Δr gegenüber der Achse des Rückschlussrohrs 12 radial versetzt. Zwar wäre die magnetische Induktion B_{PM} in Bezug auf die Achse des Läufers 11 ohne Rückschlussrohr und ohne magnetisch leitenden Ring(e) grundsätzlich rotationssymmetrisch verteilt, durch den radialen Versatz Δr des Läufers in Bezug auf den koaxial zur Achse des Rückschlussrohrs 12 (typischerweise das Statorrohr) angeordneten radial inneren Ring 30 ist sie dies jedoch nicht. Dort, wo der Ring 30 näher zum Permanentmagneten PM des Läufers 11 angeordnet ist, ist die magnetische Induktion B_{PM} betragsmässig grösser als dort, wo der Ring 30 weiter vom Permanentmagneten PM des Läufers 11 weg angeordnet ist, was ebenfalls zu einer vom Winkel ϕ abhängigen Verteilung der magnetischen Induktion B_{PM} führt, wie dies in **Fig. 35** zu erkennen ist. Das von der nicht-rotationssymmetrisch verteilten magnetischen Induktion B_{PM} im radial inneren Ring 30 hervorgerufene magnetische Potential ist zwar zunächst abhängig vom Winkel ϕ, da der Ring 30 jedoch magnetisch sehr gut leitend ist und somit näherungsweise einen magnetischen "Kurzschluss" darstellt, wird dadurch eine allfällige unterschiedliche Potentialverteilung sofort ausgeglichen, sodass der radial innere Ring 30 unabhängig vom Winkel ϕ das konstante magnetische Potential ψ₂ aufweist. In gleicher Weise weist das Rückschlussrohr 12 unabhängig vom Winkel ϕ das magnetische Potential ψ₁ auf. Somit ist die betragliche Grösse der magnetischen Induktion B im Luftspalt zwischen dem radial inneren Ring 30 und dem Rückschlussrohr 12, also dort, wo der Sensor Sᵢ (bei dem hier betrachteten Ort der Sensor 33) angeordnet ist, nicht mehr vom (Umfangs-) Winkel ϕ abhängig. Dadurch ist der Einfluss des radialen Versatzes Δr der Achse des Läufers 11 in Bezug auf den Umfangswinkel kompensiert, sodass die vom Magnetfeldsensor Sᵢ gemessene Flussdichte B_{r_sens} nicht mehr vom Winkel ϕ abhängig ist. Dies wird aus der Darstellung der vom Magnetfeldsensor gemessenen magnetischen Induktion B_{r_sens} über dem Winkel ϕ ersichtlich, wie dies in **Fig. 36** dargestellt ist.

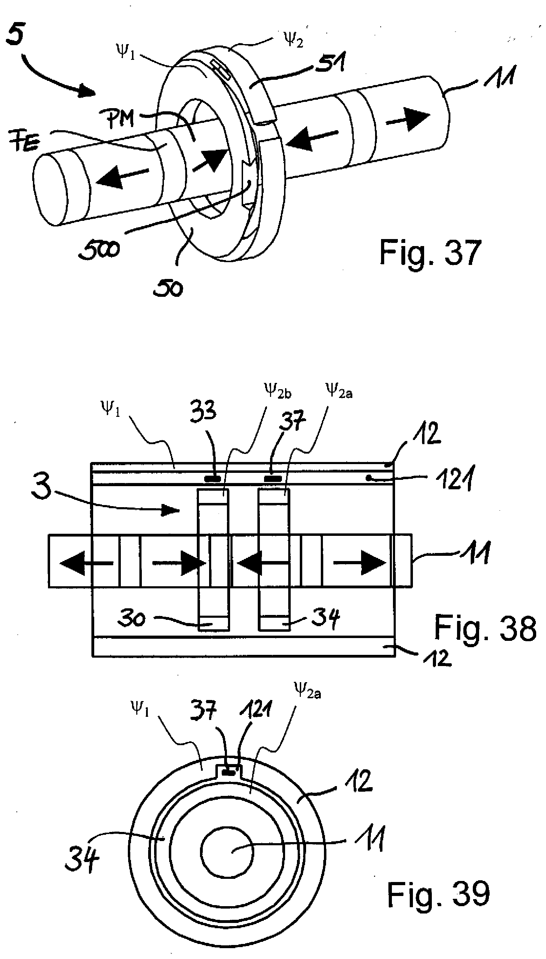

In **Fig. 37** ist ein viertes Ausführungsbeispiel der erfindungsgemässen Vorrichtung 5 dargestellt, welches dem Ausführungsbeispiel gemäss Fig. 22 ähnlich ist, wobei jedoch der Ring 50 eine Querschnittsänderung aufweist, im vorliegenden Fall eine Kerbe 500. Der Ring 51 hingegen umschliesst zwar weitgehend den Läufer 11, ist aber nicht vollständig geschlossen ausgebildet. Solche Querschnittsänderungen (wie im vorliegenden Fall die Kerbe) oder nicht vollständig geschlossene Ausbildungen eines Rings können beispielsweise produktionstechnisch bedingt sein, oder konstruktiv günstig für eine Anordnung in einem Linearmotor. Sie bewirken bei günstiger Platzierung bzw. bei gegenüber kleiner räumlicher Ausdehnung keine bzw. nur eine unwesentliche Veränderung der Funktionsweise, solange in Bezug auf die Querschnittsänderung der Ring 50 nicht in die magnetische Sättigung geht (siehe weiter oben zur Funktionsweise). In Bezug auf die nicht vollständig geschlossene Ausbildung des Rings 51 findet ebenfalls der magnetische Kurzschluss (Ausgleichsvorgang) statt, da ja die einzelnen Partien des Rings 51 nach wie vor magnetisch leitend miteinander verbunden sind, sodass sich - wie weiter oben erläutert - wieder die magnetischen Potentiale ψ₁ bzw. ψ₂ auf den Ringen 50 bzw. 51 einstellen.

In **Fig. 38** und **Fig. 39** ist schliesslich ein Ausschnitt aus einem Linearmotor dargestellt, mit einem Ausführungsbeispiel der erfindungsgemässen Vorrichtung 3 ähnlich Fig. 27. Allerdings ist das Rückschlussrohr 12 mit einer axialen Nut 121 versehen, in welcher die beiden Magnetfeldsensoren 33,37 angeordnet sind. Hier ist sowohl eine Anordnung der Magnetfeldsensoren 33,37 in der axialen Nut 121 möglich, wie auch die Sensorsignale in dieser axialen Nut 121 herausgeführt werden können (auch können nur die Sensorsignale in dieser axialen Nut herausgeführt werden währende die Magnetfeldsensoren an anderer Stelle angeordnet sind). Auf den radial inneren Ringen 30 bzw. 34 stellt sich das magnetische Potential ψ_{2b} bzw. ψ₂ₐ ein, während sich im Rückschlussrohr das magnetische Potential ψ₁ einstellt (Vorraussetzung: Sättigungsgrenze wird nicht erreicht, siehe oben).

Die Erfindung ist vorstehend anhand von Ausführungsbeispielen erläutert. Diese sind aber nur beispielhaft zu betrachten und sollen aber den Schutzbereich nicht beschränken. Insbesondere sind Alternativen denkbar, die ebenfalls von der erfindungsgemässen Lehre Gebrauch machen. Der Schutzbereich ist daher lediglich durch die nachstehenden Patentansprüche definiert .

## Patentansprüche

1. Vorrichtung (2;3;4;5) zur Bestimmung der axialen Position des Läufers (11) eines Linearmotors, mit mindestens einem Paar von magnetisch leitenden, ringförmig ausgebildeten Elementen (12;20,21; 30,31,34,35;40,41,44,45;48;50,51), die im wesentlichen koaxial und in einem geringen Abstand (dᵣ;d_{b}) voneinander angeordnet sind, sodass zwischen ihnen ein Luftspalt (22;32,36;42,46) gebildet wird, in welchem ein Magnetfeldsensor (23;33,37;43,47;Sᵢ) zur Messung des magnetischen Feldes (B,Bᵣ) im Luftspalt angeordnet ist, wobei im eingebauten Zustand die beiden ringförmig ausgebildeten Elemente (12;20,21; 30,31,34,35;40,41,44,45;48;50,51) den Läufer (11) des Linearmotors umschliessen.

2. Vorrichtung nach Anspruch 1, mit mindestens zwei Paaren (20,21,40,41;30,34,12;40,45,48) von magnetisch leitenden, ringförmigen Elementen, wobei bei benachbart angeordneten Paaren zwei ringförmige Elemente (21,40;31,35;41,44) von verschiedenen Paaren ein gemeinsames ringförmigen Element (21,40;12;48) bilden, welches jeweils beiden Paaren zugeordnet ist.

3. Vorrichtung nach einem der vorangehenden Ansprüche, bei welcher jeweils mindestens eines der ringförmigen Elemente (51) des jeweiligen Paares von ringförmigen Elementen in Umfangsrichtung betrachtet nicht vollständig geschlossen ausgebildet ist.

4. Vorrichtung nach einem der vorangehenden Ansprüche, bei welcher der Querschnitt von mindestens einem der ringförmigen Elemente (12;50) des jeweiligen Paares von ringförmigen Elementen in Umfangsrichtung betrachtet nicht gleichmässig (121;500) ausgebildet ist.

5. Vorrichtung nach einem der vorangehenden Ansprüche, bei welcher die beiden ringförmigen Elemente (30,31;34,35) des jeweiligen Paares, zwischen denen der Luftspalt (32;36) gebildet wird, in welchem der Magnetfeld-sensor (33;37) angeordnet ist, koaxial in einem radialen Abstand (dᵣ) voneinander angeordnet sind.

6. Vorrichtung nach einem der vorangehenden Ansprüche, bei welcher die beiden ringförmigen Elemente (40,41;44,45) des jeweiligen Paares, zwischen denen der Luftspalt (42;46) gebildet wird, koaxial in einem axialen Abstand (d_{b}) voneinander angeordnet sind.

7. Vorrichtung nach einem der vorangehenden Ansprüche, bei welcher zwei Paare von ringfömigen Elementen (30,31,34,35;40,41,44,45) vorgesehen sind, welche in axialer Richtung in einem vordefinierten Abstand (dₐ) voneinander angeordnet sind.

8. Vorrichtung nach den Ansprüchen 6 und 7, bei der die zwei in axialer Richtung benachbart angeordneten ringförmigen Elemente (41,44) der beiden verschiedenen Paare von ringförmigen Elementen durch ein beiden Paaren zugeordnetes, gemeinsames ringförmiges Element (48) gebildet sind.

9. Linearmotor mit einem Stator (10) und einem relativ zum Stator axial verschiebbaren Läufer (11), sowie mit einer Vorrichtung (2;3;4;5) zur Bestimmung der axialen Position des Läufers (11) gemäss einem der vorangehenden Ansprüche, bei welchem Linearmotor die beiden ringförmig ausgebildeten Elemente (12;20,21; 30,31,34,35;40,41,44,45;48;50,51) den Läufer (11) des Linearmotors umschliessen.

10. Linearmotor nach Anspruch 9, mit einem magnetisch leitenden Rückschlussrohr (12), welches zumindest die Vorrichtung (2;3;4;5) zur Bestimmung der axialen Position des Läufers (12) umschliesst.

11. Linearmotor nach Anspruch 10, bei welchem die beiden ringförmigen Elemente (30,31;34,35) des jeweiligen Paares von ringförmigen Elementen der Vorrichtung zur Bestimmung der axialen Position des Läufers in einem radialen Abstand (dᵣ) voneinander angeordnet sind, und bei welchem das radial äussere ringförmige Element (31;35) des jeweiligen Paares von ringförmigen Elementen durch das magnetisch leitende Rückschlussrohr (12) gebildet wird.

12. Linearmotor nach Anspruch 11, bei welchem das magnetische Rückschlussrohr (12) eine radiale Vertiefung (120) aufweist, in welcher die Vorrichtung (3) zur Bestimmung der axialen Position des Läufers angeordnet ist, wobei jeweils das radial innere ringförmige Element (30;34) des jeweiligen Paares von ringförmigen Elementen derart in der Vertiefung angeordnet ist, dass es auf der Höhe der Rohrwand des Rückschlussrohres (12) ausserhalb der Vertiefung (120) angeordnet ist.

## Claims

1. Apparatus (2;3;4;5) for determination of the axial position of the armature (11) of a linear motor, comprising at least one pair of magnetically permeable, annular elements (12;20,21; 30,31,34,35;40,41,44,45;48;50,51), which are arranged essentially coaxially and at a short distance (dᵣ;d_{b}) from one another, such that an air gap (22;32,36;42,46) is formed between them, in which a magnetic field sensor (23;33,37;43,47;Sᵢ) for measurement of the magnetic field (B,Bᵣ) in the air gap is arranged, wherein in the installed state the two annular elements (12;20,21;30,31,34,35;40,41,44,45; 48;50,51) surrounding the armature (11) of the linear motor.

2. Apparatus according to claim 1, comprising at least two pairs (20,21,40,41;30,34,12;40,45,48) of magnetically permeable annular elements, wherein in the case of pairs which are arranged adjacently two annular elements (21,40;31,35;41,44) of different pairs form a common annular element (21,40;12;48) which is in each case associated with both pairs.

3. Apparatus according to any one of the preceding claims, in which in each case at least one of the annular elements (51) of the respective pair of annular elements is not completely closed when viewed in circumferential direction.

4. Apparatus according to any one of the preceding claims, in which the cross-section of at least one of the annular elements (12;50) of the respective pair of annular elements is not uniform (121;500) when viewed in circumferential direction.

5. Apparatus according to any one of the preceding claims, in which the two annular elements (30,31;34,35) of the respective pair between which the air gap (33;37) is formed, in which air gap the magnetic field sensor (33;37) is arranged, are arranged coaxially at a radial distance (dᵣ) from one another.

6. Apparatus according to any one of the preceding claims, in which the two annular elements (40,41;44,45) of the respective pair between which the air gap (42;46) is formed are arranged coaxially at an axial distance (d_{b}) from one another.

7. Apparatus according to any one of the preceding claims, in which two pairs of annular elements (30,31,34,35;40,41,44,45) are provided and are arranged at a predefined distance (dₐ) from one another in axial direction.

8. Apparatus according to claims 6 and 7, in which the two annular elements (41,44), which are arranged adjacently in axial direction, of the two different pairs of annular elements are formed by a common annular element (48) associated with both pairs.

9. Linear motor comprising a stator (10) and a armature (11) which can be moved axially relative to the stator, and having an apparatus (2;3;4;5) for determination of the axial position of the armature (11) according to any one of the preceding claims, in which linear motor the two annular elements (12;20,21; 30,31,34,35;40,41,44,45;48;50,51) surround the armature (11) of the linear motor.

10. Linear motor according to claim 9, comprising a magnetically permeable return-path tube (12), which surrounds at least the apparatus (2;3;4;5) for determination of the axial position of the armature (12) .

11. Linear motor according to claim 10, in which the two annular elements (30,31;34,35) of the respective pair of annular elements of the apparatus for determination of the axial position of the armature are arranged at a radial distance (dᵣ) from one another, and in which the radially outer annular element (31;35) of the respective pair of annular elements is formed by the magnetically permeable return-path tube (12).

12. Linear motor according to claim 11, in which the magnetic return-path tube (12) has a radial depression (120) in which the apparatus (3) for determination of the axial position of the armature is arranged, wherein the radially inner annular element (30;34) of the respective pair of annular elements in each case is arranged in the depression in a manner such that it is arranged essentially at the same level as the tube wall of the return-path tube (12) outside the depression (120).

## Revendications

1. Dispositif (2;3;4;5) pour déterminer la position axiale de l'armature (11) d'un moteur linéaire, comprenant au moins une paire d'éléments de forme annulaire magnétiquement conducteurs (12;20;21;30,31,34,35;40,41,44,45;48;50,51) qui sont disposés sensiblement coaxialement et avec un faible espacement (dᵣ;d_{b}) les uns par rapport aux autres, de sorte qu'entre eux est formé un entrefer (22;32,36;42,46) dans lequel est disposé un capteur de champ magnétique (23;33,37;43,47;Sᵢ) pour mesurer le champ magnétique (B,Bᵣ) dans l'entrefer, à l'état assemblé les deux éléments de forme annulaire (12;20;21;30,31,34,35;40,41,44,45;48;50,51) entourant l'armature (11) du moteur linéaire.

2. Dispositif selon la revendication 1, comprenant au moins deux paires (20,21,40,41;30,34,12;40, 45,48) d'éléments annulaires magnétiquement conducteurs, en présence de paires disposées de manière contiguë deux éléments annulaires (21,40;31,35;41,44) de paires différentes formant un élément annulaire commun (21,40;12;48) qui est associé respectivement aux deux paires.

3. Dispositif selon une des revendications précédentes, dans lequel, vu dans la direction circonférentielle, respectivement au moins un des éléments annulaires (51) de la paire respective d'éléments annulaires est conçu pour ne pas être complètement fermé.

4. Dispositif selon une des revendications précédentes, dans lequel, vue dans la direction circonférentielle, la section transversale d'au moins un des éléments annulaires (12;50) de la paire respective d'éléments annulaires n'est pas conçue de manière uniforme (121;500).

5. Dispositif selon une des revendications précédentes, dans lequel les deux éléments annulaires (30,31;34,35) de la paire respective, entre lesquels est formé l'entrefer (32;36) dans lequel est disposé le capteur de champ magnétique (33;37), sont disposés coaxialement à une distance radiale (dᵣ) l'un de l'autre.

6. Dispositif selon une des revendications précédentes, dans lequel les deux éléments annulaires (40,41;44,45) de la paire respective, entre lesquels l'entrefer (42;46) est formé, sont disposés coaxialement à une distance axiale (d_{b}) l'un de l'autre.

7. Dispositif selon une des revendications précédentes, dans lequel sont prévues deux paires d'éléments annulaires (30,31,34,35;40, 41,44,45) qui, dans la direction axiale, sont disposées à une distance prédéfinie (dₐ) l'une de l'autre.

8. Dispositif selon les revendications 6 et 7, dans lequel les deux éléments annulaires (41,44), disposés de manière contiguë dans la direction axiale, des deux paires différentes d'éléments annulaires sont formés par un élément annulaire commun associé aux deux paires.

9. Moteur linéaire comprenant un stator (10) et une armature (11) déplaçable axialement par rapport au stator, ainsi qu'un dispositif (2;3;4;5) pour déterminer la position axiale de l'armature (11) selon une des revendications précédentes, dans lequel moteur linéaire les deux éléments de forme annulaire (12;20;21;30,31,34,35;40,41,44, 45;48;50,51) entourent l'armature (11) du moteur linéaire.

10. Moteur linéaire selon la revendication 9, comprenant un tube de couplage magnétiquement conducteur (12) qui entoure au moins le dispositif (2;3;4;5) pour déterminer la position axiale de l'armature (12).

11. Moteur linéaire selon la revendication 10, dans lequel les deux éléments annulaires (30,31;34,35) de la paire respective d'éléments annulaires du dispositif pour déterminer la position axiale de l'armature sont disposés à une distance radiale (dᵣ) l'un de l'autre, et dans lequel l'élément annulaire radialement extérieur (31;35) de la paire respective d'éléments annulaires est formé par le tube de couplage magnétiquement conducteur (12).

12. Moteur linéaire selon la revendication 11, dans lequel le tube de couplage magnétique (12) comporte un renfoncement radial (120) dans lequel est disposé le dispositif (3) pour déterminer la position axiale de l'armature, l'élément annulaire radialement intérieur (30;34) de la paire respective d'éléments annulaires étant respectivement disposé dans le renfoncement de façon à être disposé au niveau de la paroi de tube du tube de couplage (12) à l'extérieur du renfoncement (120).
